(19) Europäisches Patentamt

European Patent Office

Office européen des brevets

(11) Veröffentlichungsnummer: **0 290 374 B1**

(12) **EUROPÄISCHE PATENTSCHRIFT**

(45) Veröffentlichungstag der Patentschrift: **08.09.93**

(51) Int. Cl.⁵: **G09G 1/14**, B41B 19/00

(21) Anmeldenummer: **88730096.0**

(22) Anmeldetag: **22.04.88**

(54) Verfahren und Vorrichtung zum Generieren und zum Reproduzieren von zweidimensionalen graphischen Objekten.

(30) Priorität: **23.04.87 DE 3713847**

(43) Veröffentlichungstag der Anmeldung:
**09.11.88 Patentblatt 88/45**

(45) Bekanntmachung des Hinweises auf die Patenterteilung:
**08.09.93 Patentblatt 93/36**

(84) Benannte Vertragsstaaten:
**AT BE CH DE FR GB IT LI LU NL SE**

(56) Entgegenhaltungen:
**DE-B- 2 422 464**
**DE-C- 2 953 600**

**De Boor, Carl: A practical guide to splines.**
**Springer Verlag, New York, 1978.**

(73) Patentinhaber: **H. BERTHOLD AKTIENGESELL-SCHAFT**
**Teltowkanalstrasse 1-4**
**D-12247 Berlin(DE)**

(72) Erfinder: **Hillenbrand, Franz, Dr.-Ing.**
**Seekorso 21b**
**D-1000 Berlin 22(DE)**
Erfinder: **Schroer, Klaus, Dipl.-Math.**
**Angerburger Allee 43**
**D-1000 Berlin 19(DE)**
Erfinder: **Rebs, Frank, Dipl.-Math.**
**Bornemannstrasse 4**
**D-1000 Berlin 65(DE)**
Erfinder: **Dlabka, Michael, Dr.-Ing.**
**Fritschestrasse 60**
**D-1000 Berlin 12(DE)**
Erfinder: **Sprenger, Dietmar, Dipl.-Ing.**
**Forsterstrasse 43**
**D-1000 Berlin 36(DE)**

(74) Vertreter: **Pfenning, Meinig & Partner**
**Kurfürstendamm 170**
**D-10707 Berlin (DE)**

EP 0 290 374 B1

**Beschreibung**

Die Erfindung betrifft ein Verfahren und eine Vorrichtung zum Generieren und zum Reproduzieren von zweidimensionalen graphischen Objekten für die elektronische oder elektromechanische Wiedergabe.

Aus der DE-B-24 22 464 sind ein Verfahren zum Kodieren von Schriftzeichen für den photoelektronischen Lichtsatz, ein entsprechendes Dikodierverfahren und ein Zeichengenerator zur Darstellung der kodierten Schriftzeichen bekannt, bei denen die Schriftzeichen auf der Basis eines normierten Quadrates entsprechend den Koordinaten eines Ausgangspunktes des Außenlinien des Zeichens als Digitalzahlen kodiert werden und weiter gemäß veränderlicher Parameter dieser Außenlinien, wie Steigungen und Krümmungen definiert sind. Hierzu werden Befehle für eine Krümmungsänderung verwendet. Die Erzeugung einer geraden ansteigenden oder abfallenden Linie, die auf auf einem Steigungsänderungsbefehl basierenden Berechnungen beruht, erfordert aber eine hohe Speicherkapazität für eine große Anzahl Steigungsinformationen, insbesondere wenn gerade, geneigte Strecken als Schriftzeichenumrißlinienabschnitte ohne Stufen in einer hohen typographischen Qualität zu erzeugen sind. Deswegen kann zur Bildung einer Außenlinie mit gerader Steigung ein spezieller Befehl vorgesehen werden, der inkrementale Änderungen von Y-Koordinatenwerten beinhaltet. Dieser spezielle Befehl gibt an, wie, ausgehend von einem Ausgangspunkt, der Y-Koordinatenwert für jedes konstante X-Koordinateninkrement zu verändert ist. Zu jedem speziellen Befehl gehört deswegen die Angabe einer Anzahl von X-Inkrementen und damit von Berechnungszyklen für die eine Veränderung der Y-Koordinaten oder der Steigung oder der Krümmung auszurechnen ist. Der bekannte Zeichengenerator benötigt eine große Speicherkapazität zur Speicherung von Steigungsinformationen für typographisch hochwertige Schriftzeichen sowie zur Speicherung der Anzahl von Berechnungsschritten, für welche die speziellen Befehle gelten sollen. Außerdem sind die Berechnungen relativ aufwendig und insbesondere bei der Dekodierung wird eine hohe Rechenzeit benötigt.

Hinzu kommt, daß alle Verfahren, bei denen die Außenlinien durch Steigungen oder Krümmungen definiert sind, numerisch schlecht konditioniert und instabil sind, d.h. ein ungünstiges Fehlerfortpflanzungsverhalten besitzen.

Die DE-C-29 53 600 beschreibt ein Setzgerät zur automatischen Generierung von Schriftzeichen mit einem Schriftspeicher, der für jedes abzubildende Schriftzeichen in einem Normalraster die ersten und zweiten Koordinaten von Ausgangspunkten zweier Umrißlinien bezogen auf den Ursprung des Normalrasters und eine Vielzahl geradliniger, sich aufeinanderfolgend entlang des Schriftzeichenumrisses von dem Ausgangspunkt aus erstreckender Vektoren als Digitalzahlen speichert. Die Vektoren werden dabei jeweils durch eine erste, den ersten Koordinatenabstand und eine zweite, den zweiten Koordinatenabstand von einem Vektorende zum anderen darstellende Digitalzahl festgelegt. Bei dieser Art der Schriftzeichengenerierung ist die Qualität der einzelnen Schriftzeichen nicht sehr gut, wird bei Vergrößerung der Zeichen immer schlechter und bei einer Verbesserung der Qualität durch Verringerung der Vektorlänge wird die zu verarbeitende Datenmenge stark vergrößert.

Im Stand der Technik ist es allgemein bekannt, Konturen durch Polynome anzunähern. Aus der Veröffentlichung von De Boor, Carl, "A practical guide to splines", Springer Verlag, New York, 1978, wird die Verwendung von kubischen Spline-Funktionen zur Approximation von Kurvenstücken beschrieben.

Der Erfindung liegt die Aufgabe zugrunde, ein Verfahren und eine Vorrichtung zum Generieren von graphischen objekten nach dem Oberbegriff des hauptanspruchs zu schaffen, das bei möglichst geringem Rechen- und Daten- und somit Speicheraufwand glatte und ästhetische Konturen hoher Qualität erzeugt, wobei eine schnelle Zeichentransformation und anschließende Dekodierung gewährleistet sein soll.

Diese Aufgabe wird erfindungsgemäß durch die kennzeichnenden Merkmale des Hauptanspruchs gelöst.

Durch die in den Unteransprüchen angegebenen Maßnahmen sind vorteilhafte Weiterbildung und Verbesserungen möglich.

Mit dem erfindungsgemäßen Verfahren wird eine sehr gute Qualität der generierten graphischen Objekte erreicht, wobei geringe Datenmengen benötigt werden. Besonders vorteilhaft ist, daß schnell eine Transformation der generierten Schriftzeichen ohne großen Rechenaufwand möglich und die anschließende Dekodierung mit großer Geschwindigkeit durchführbar ist.

Ein Ausführungsbeispiel des erfindungsgemäßen Verfahrens wird anhand der Zeichnungen in der nachfolgenden Beschreibung näher erläutert. Es zeigen:

Fig. 1 ein zu generierendes Schriftzeichen,

Fig. 2 ein Konturteil des zu generierenden Zeichens, anhand dessen die Generierung zeichnerisch dargestellt ist,

Fig. 3 ein weiteres zu generierendes Schriftzeichen,

2

EP 0 290 374 B1

Fig. 4A und 4B    ein Flußdiagramm für das erfindungsgemäße Verfahren,
Fig. 5    eine erfindungsgemäße Ausgestaltung der Vorrichtung zum Generieren von zweidimensionalen graphischen Objekten,
Fig. 6    ein Blockschaltbild der Schaltung zur Eckenerkennung und Filterung,
Fig. 7    eine schaltungsgemäße Ausgestaltung eines Konturfilters nach Fig. 6,
Fig. 8    eine schaltungsgemäße Ausgestaltung eines Eckenfilters nach Fig. 6, und
Fig. 9    eine schaltungsgemäße Ausgestaltung der Approximationsschaltung.

Für die elektronische und/oder elektromechanische Wiedergabe von graphischen Objekten, beispielsweise von Schriftzeichen für elektronische Setzverfahren, werden in jeweils unterschiedlichen Schriftbildern eine Vielzahl von Zeichen benötigt, wobei die Vielzahl von Zeichen einer Schriftart als Zeichensatz bezeichnet wird. Die Zeichen werden in kodierter Form gespeichert, beispielsweise auf einer Floppy-Disk oder einem Magnetband, wobei in der Fotosetzmaschine beispielsweise mit einer Kathodenstrahlröhre oder mit einer Laserlichtquelle der Aufzeichnungsstrahl in Abhängigkeit von den gespeicherten und anschließend dekodierten Daten gesteuert und auf ein fotosensitives Material gerichtet wird.

Die zu kodierenden Objekte, im folgenden Zeichen genannt, liegen in digitaler Form vor, wobei die Konturen als Referenzkonturen, beispielsweise durch eine Folge von Koordinaten von Konturenpunkten, vorgegeben sind. Graphische Formen sind vorab zu digitalisieren. Die Zeichen müssen in der Weise kodiert werden, daß sie ohne zu großen Speicheraufwand gespeichert und beim Dekodieren schnell in die gewünschte Form umgesetzt werden können. Um das Zeichen in die digitale Form zu bringen, die für die erfindungsgemäße Kodierung geeignet ist, werden in einem ersten Schritt die Konturen in Konturteile aufgeteilt, deren Anfangs- und Endpunkte festgelegt werden, wobei diese Punkte manuell oder abhängig von der Änderung der Krümmung oder der Steigungen in x- und y-Richtung bestimmt werden.

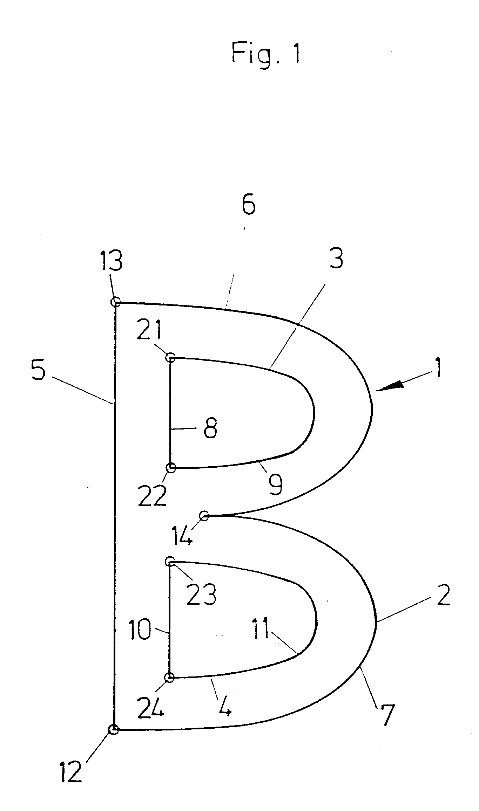

In Fig. 1 ist ein Zeichen 1 in Form eines B dargestellt, das eine Außenkontur 2 und zwei Innenkonturen 3, 4 aufweist, wobei die Außenkontur 2 drei Konturteile 5, 6, 7 und die Innenkonturen 3, 4 jeweils zwei Konturteile 8, 9; 10,11 besitzt. Die Konturteile sollen unter Verwendung von parametrischen Spline-Funktionen dargestellt werden, die vorgegebene Endpunkte oder Anfangs- und Endpunkte verbinden. Der Startpunkt für die Außenkontur 2 ist beispielsweise mit dem Bezugszeichen 12 bezeichnet und dient gleichzeitig als Anfangspunkt des Konturteils 5 mit dem Endpunkt 13.

Nach dem erfindungsgemäßen Verfahren wird zwischen Anfangs- und Endpunkt 12, 13 des Referenzkonturteils 5 ein definiertes Kurvenstück vorzugsweise ein Geradenstück gelegt. Sowohl das Referenzkonturteil 5 als auch das Geradenstück, werden en in die gleiche Anzahl von Bogenteil aufgeteilt und die den jeweiligen Bogenteil zugeordneten Koordinatenpunkte x (t), y (t) des Geradenstücks des Referenzkonturteils werden miteinander verglichen. Da bei dem Scannen der Referenzkontur kleine Abweichungen von einer Geraden vorkommen können, wird bei dem Vergleich des Referenzkonturteils 5 mit dem durch die Anfangs- und Endpunkt 12, 13 gehenden Geradenstück eine Toleranz vorgegeben. Da das Geradenstück nicht aus den gegebenen Toleranzgrenzen herausfällt, wird es als übereinstimmend mit dem Referenzkonturteil 5 erkannt und kann als lineare parametrische Splinefunktion mit den Anfangs- und Endpunkten als Stützpunkte festgelegt werden.

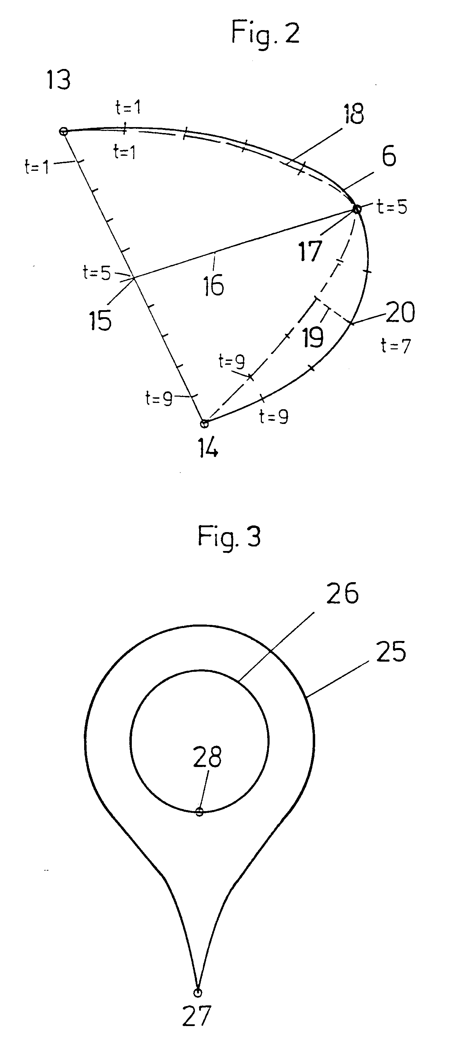

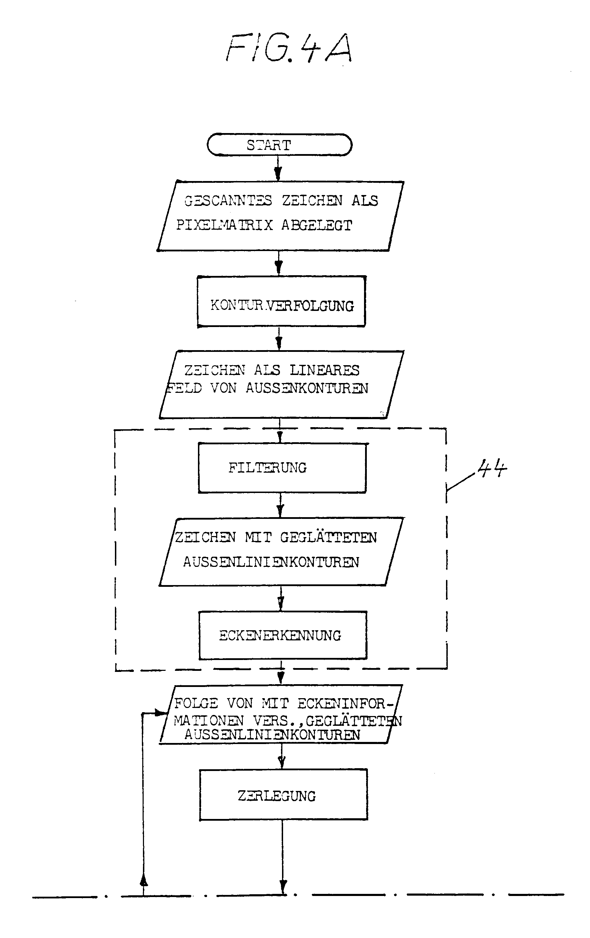

In Fig. 2 ist die Bestimmung des zweiten Konturteils 6 der Kontur 2 näher dargestellt, das durch die Anfangs- und Endpunkte 13 und 14 begrenzt ist. Die beiden Punkte 13, 14 werden durch ein Geradenstück 15 miteinander verbunden. Sowohl das Geradenstück als auch das Referenzkonturteil 6 werden jeweils in zehn gleiche Bogenteil aufgeteilt, so daß sich auf dem Geradenstück 15 und dem Referenzkonturteil 6 Zwischenpunkte x(t) und y(t) mit der Bogenlänge von t =0... 10 ergeben. Diese Größen sind nur beispielhaft angegeben, da üblicherweise die Zwischenpunkte in einem sehr engen Raster liegen, z.B. kann die Länge des Bogenteils d.h. die Schrittweite zwischen zwei Zwischenpunkten, auf dem Referenzkonturteil 6 auf 1/20 mm festgelegt werden. Ausgehend vom Anfangspunkt 13 werden die Koordinatenpunkte x(t), y(t) auf dem Geradenstück 15 und dem Referenzkonturteil 6 miteinander verglichen und der euklidische Abstand zwischen ihnen festgestellt. Ist dieser Abstand größer als ein den gewünschten Fehler zwischen Referenzkontur und zu erstellender Kontur bestimmenden vorgegebener Abstand - dies ist bei der ersten Näherung mit dem Geradenstück 15 bei fast allen Koordinatenpunkten gegeben - , so wird der größte Abstand bestimmt. In der Fig. 2 ist dieser größte Abstand 16 den Koordinatenpunkten bei der Bogenlänge t = 5 zugeordnet. Der Koordinatenpunkt 17 auf dem Referenzkonturteil 6 wird als Stützpunkt für die Berechnung einer Splinekurve ausgewählt, wobei Polynome dritten Grades verwendet werden. Durch die Grundstützpunkte 13, 14 (Anfangs- und Endpunkt) und den ausgewählten Stützpunkt 17 wird die Splinekurve 18 gelegt, die sich in ihrer Form schon dem Referenzkonturteil 6 annähert. Auch diese Splinekurve 18 wird in zehn gleiche Bogenteile unterteilt und die jeweils zugeordneten Koordinatenpunkte x(t), y(t) für die Bogenlänge t = 0 ... 10 der Splinekurve 18 und des Referenzkonturteils 6 miteinander verglichen. Bei Abweichungen voneinander wird wieder der größte Abstand 19 bestimmt, der im Ausführungsbeispiel bei

3

der Bogenlänge t = 7 liegt. Der so gefundene Koordinatenpunkt 20 wird als weiterer Stützpunkt ausgewählt und durch die Stützpunkte 13, 14, 18 und 20 eine neue Splinekurve gelegt. Um die Übersichtlichkeit zu wahren, werden in der Fig. 2 keine weiteren Kurven bzw. Abweichungen vermerkt, aber der Vorgang des Hinzufügens von neuen Stützpunkten wird solange wiederholt, bis der Abstand zwischen dem Referenzkonturteil und der letztgefundenen Splinekurve nirgends größer ist als der vorgegebene, den Fehler bestimmende Abstand.

Somit kann das Konturteil 6 jederzeit durch Splinefunktionen dritten Grades unter Zuhilfenahme der gebundenen Stützpunkte bestimmt werden.

In gleicher Weise werden die Stützpunkte für die Splinekurven der Konturteile 7, 9 und 11 festgelegt und die Konturteil 8 und 10 werden entsprechend dem Konturteil 5 als lineare Splinefunktionen mit den Stützpunkten 21, 22 und 23, 24 ausgedrückt.

Die das gesamte Zeichen nach Fig. 1 beschreibenden Daten werden gespeichert, und zwar werden vorzugsweise nacheinander nur die Stützpunkte $x_s(t)$, $y_s(t)$ und die Länge der Bogenteile zwischen zwei Stützpunkten abgelegt, wobei zusätzlich noch Kennungen vorhanden sind, die beispielsweise angeben, daß ein neues Zeichen, eine neue Kontur und ein neues Konturteil anfängt.

In Fig. 3 ist ein weiteres Zeichen mit zwei Konturen 25, 26 dargestellt, die jeweils den gleichen Anfangs- und Endpunkt 27, 28 aufweisen. Zur Bestimmung des ersten Stützpunktes neben den durch die Anfangs- und Endpunkte vorgegebenen Grundstützpunkten kann durch diese Punkte 27, 28 kein Geradenstück gelegt werden bzw. das Geradenstück ist zu einem Punkt zusammengeschrumpft, da x(t) = const und y(t) = const sind. Die Referenzkontur 25 wird, wie schon oben beschrieben, in eine Anzahl von Bogenteilen aufgeteilt und dann wird jeder Koordinatenpunkt x(t), y(t) für die Bogenlänge t = 0 ...n auf der Referenzkontur 25 mit dem Anfangs- bzw. Endpunkt 27 verglichen, wobei der Koordinatenpunkt auf der Referenzkontur 25 als Stützpunkt gewählt wird, der den größten Abstand zum Anfangs- bzw. Endpunkt 27 aufweist. Nun kann eine Splinekurve durch die drei Stützstellen, Grundstützpunkte (identisch) und gewählter Stützpunkt, gelegt werden. Die weitere Vorgehensweise ist wie oben beschrieben.

Die in der Fig. 3 gezeigten Konturen 25, 26 sind unterschiedlicher Art, und zwar insofern, als bei der Kontur 25 die Anfangs- und Endsteigungen in Punkt 27 nicht stetig ineinander übergehen, während bei der Kontur 26 die erste Ableitung im Anfangs- und Endpunkt 28 stetig ist. Die Kontur 25 wird als nicht glatte, die Kontur 26 als glatte Kontur bezeichnet.

Die genannten Unterschiede müssen bei der Festlegung der Splinekurven berücksichtigt werden. Dies geschieht dadurch, daß unterschiedliche Spline-Funktionen gewählt werden. Periodische Splinefunktionen zeichnen sich unter anderem dadurch aus, daß ihre ersten Ableitungen am Anfangs- und Endpunkt immer stetig aneinander schließen. Daher werden sie für die Darstellung von glatten Konturen verwendet, während für nicht glatte Konturen natürliche Splinefunktionen gewählt werden.

Bevor das oben beschriebene eigentliche Verfahren zur Erstellung des Zeichens erfolgt, muß jede Referenzkontur in die unterschiedlichen Konturteile aufgeteilt werden. Dazu wird das Referenzzeichen, daß häufig als gescanntes Zeichen zur Verfügung steht, hinsichtlich der Krümmung an den Konturpunkten und der Krümmungsänderung in bezug auf benachbarte Konturpunkte untersucht. Abhängig von den Krümmungswerten und Krümmungsänderungswerten wird ein Entscheidungsverfahren zur Eckenerkennung durchgeführt.

Bei Überschreitung eines für das Zeichen oder die Schrift vorgegebenen Krümmungswertes wird dort eine Ecke identifiziert. Auch Ecken mit stumpfen Winkeln werden anhand ihres charakeristischen Kurververlaufs als solche erkannt. Bei Bedarf werden bei Schriften mit rundauslaufenden, stark gekrümmten Auszügen diese identifiziert, um ausschließen zu können, daß in diese Konturbereiche Ecken gesetzt werden.

Um die Dekodierung der generierten Zeichen schneller zu machen und um Speicherplatz zu schaffen, wird die Referenzkontur dahingehend untersucht, ob stetige, zwischen zwei Eckpunkten liegende Konturteile Geradenstücke enthalten. Beispielsweise kann in Fig. 2 der Teil des Referenzkonturteiles 6 zwischen Anfangspunkt 13 und Bogenlänge t = 2 als Geradenstück angesehen werden. Abhängig von den Krümmungs- und Krümmungsänderungswerten aufeinanderfolgender Koordinatenpunkte der Referenzkontur können Geradenstücke festgestellt werden, wobei die Anfangs- und/oder Endpunkte an den tangentialen Übergängen der Geradenstücke in das gekrümmte Konturteil liegen. Bei einer derartigen Voruntersuchung der Kontur nach Geradenstücken und Festlegung ihrer Anfangs- und Endpunkte brauchen anschließend nur noch die gekrümmten Konturteile zur Bestimmung der Stützpunkte für die Splinekurven betrachtet werden.

Weiterhin können bei der beschriebenen Voruntersuchung der Referenzkontur nach der Krümmung und den Krümmungsänderungen in dem Fall, daß die Ecken nicht genau gesetzt sind, diese automatisch neu bestimmt werden, indem Tangenten an die Konturteile angelegt und zum Schnitt gebracht werden. Dieser Vorgang ist selbstverständlich auch manuell möglich. Auf diese Weise können Ecken, die wegen der

4

Abtastungsgenauigkeit des Scanners oder geringerer Qualität der Datenquelle nicht eindeutig sind, genau definiert werden.

Zur Erzielung einer sauberen Referenzkontur wird die vom Scanner gelieferte Kontur geglättet, wobei ein Mittelungsprozeß angewandt wird. Diese Verfahren verwenden - wenn sie automatisch erfolgen - sogenannte digitale Filter. Diese Filter werden entsprechend der jeweiligen Aufgabenstellung unterschiedlich lang und komplex gewählt, d.h. unterschiedlich viele Koordinatenpunkte werden einbezogen, wobei lange Filter die hochfrequenten Anteile, beispielsweise das Rauschen vom Scanner, ausfiltern. Bei langen Filtern werden aber die Eckenerkennungsmöglichkeiten verschlechtert, so daß dafür ein Kompromiß zwischen guter Unterdrückung des Rauschens (langes Filter) und guter Eckenerkennung (kurzes Filter) gemacht werden muß.

Die Dekodierung muß im allgemeinen schnell gehen, da sie beim Beispiel einer elektronischen Setzmaschine im Belichter erfolgt und deshalb on-line durchgeführt werden muß.

Nach der Kodierung der Zeichen eines Zeichensatzes werden die Informationen hinsichtlich Anzahl der Konturen pro Zeichen, Anzahl der Konturteile pro Kontur, Anfangs- bzw. Endkoordinaten der Konturteile, Stützpunkte der Konturteile und Länge der Bogenteile zwischen zwei Stützpunkten auf einem Speichermedium festgehalten und für die Dekodierung beispielsweise in den Rechner/Speicher einer elektronischen Setzmaschine geladen.

Da nur Stützpunkte und Länge der Bogenteile zwischen ihnen abgelegt werden, können alle linearen Transformationen des Zeichens - speziell die bei Schriftzeichen gebräuchlichen Größenänderung, Stauchung/Expandierung, Drehung, Oblique Angle - außerordentlich effektiv und ohne Qualitätsverlust ausgeführt werden, da sie vor der eigentlichen Dekodierung nur auf die im Zeichenkode abgelegten Parameter (Stützpunkte und Laufweitendifferenzen) angewandt werden. Damit ist auch sichergestellt, daß bei der anschließenden Konturberechnung nur soviele Rechenschritte durchgeführt werden müssen, wie entsprechend der Zeichengröße mindestens erforderlich sind. Da bei diesen Zeichentransformationen nur polynomdefinierende Parameter verwendet werden und nicht die Folge der Konturpunkte, ist sie sehr effektiv und sind beliebige Vergrößerungen ohne Qualitätsverlust möglich. Mit Hilfe zweier linearer Gleichungssysteme, die jeweils die zweiten Ableitungen der kubischen Splinefunktionen ausrechnen, werden durch Vorgabe der Stützpunkte $x_s(t)$, $y_s(t)$ die Koeffizienten der Polynome 3. Ordnung

$$x(t) = at^3 + bt^2 + ct + d$$
$$y(t) = a't^3 + b't^2 + c't + d'$$

der jeweiligen Kurventeile festgelegt. Zur Bestimmung der Konturkoordinaten werden die Werte der Polynome an Stellen, die ein ganzzahliges Vielfaches einer vorgegebenen minimalen Schrittweite sind, berechnet.

Hierbei wird ein Verfahren angewandt, das auf einer Matrizendarstellung des betrachteten Polynoms basiert. Die das Polynom repräsentierende Matrix läßt sich mit Hilfe einer Jordanschen Transformation derart transformieren, daß sie nur noch Einträge enthält, die entweder gleich 1 oder gleich 0 sind. Dies gestattet die Auswertung des Polynoms in festen Schrittweiten durch einfache Additionen, die formal beschrieben werden durch wiederholte Multiplikation eines Startvektors mit der beschriebenen Matrix. Dazu sind für t = 0 bei einem Polynom 3. Grades vier Startwerte notwendig, die sich aus dem Wert des Polynoms bzw. seiner Ableitungen (Differenzenquotienten 1.-, 2.- und 3. Ordnung) an der Stelle t = 0 bestimmen lassen, da

$$x(t) = \frac{\dddot{x}(o)}{6} t^3 + \frac{\ddot{x}(o)}{2} t^2 + \dot{x}(o)t + x(o)$$

wobei $x(o)$, $\dot{x}(o)$, $\ddot{x}(o)$, $\dddot{x}(o)$ der Wert der Funktionen und ihrer Ableitungen an der Stelle t = o sind.

Da nur schnelle ganzzahlige Additionen verwendet werden und die Funktionswerte des Polynoms im Belichter nacheinander benötigt werden, ist das Verfahren zur Dekodierung der Konturpunkte bei Verwendung der gespeicherten Daten der generierten Zeichen außerordentlich rechenzeiteffektiv, so daß die Kontur des Zeichens schnell bestimmt werden kann und beispeilsweise als Bitmap dem Belichter der elektronischen Setzmaschine zur Verfüngung steht.

Durch den grundsätzlichen Ablauf des erfindungsgemäßen Verfahrens und einer geeigneten Normierung der Kurvenparameter wird sichergestellt, daß bei der so beschriebenen Berechnung der Folge ganzzahliger Konturpunkte, keine Lücken auftreten können.

In dem beschriebenen Ausführungsbeispiel werden nach der Generierung der Zeichen im wesentlichen nur die Stützpunkte der die Konturteile repräsentierenden Spline-Kurven gespeichert. Selbstverständlich könnten auch die Koeffizienten der Polynome oder die Startwerte abgelegt werden. Dies hätte aber den Nachteil eines wesentlich größeren Speicherbedarfs und daß ein größerer Rechenaufwand auftritt, wenn die Zeichen zu transformieren sind, beispielsweise gedreht, gestaucht, gestreckt oder dergleichen dargestellt werden sollen.

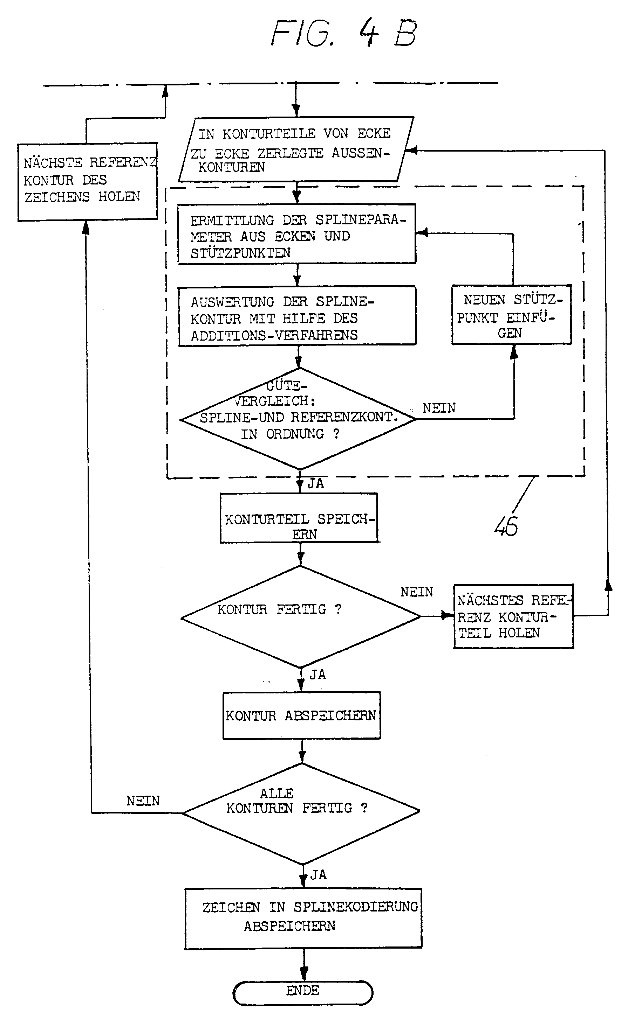

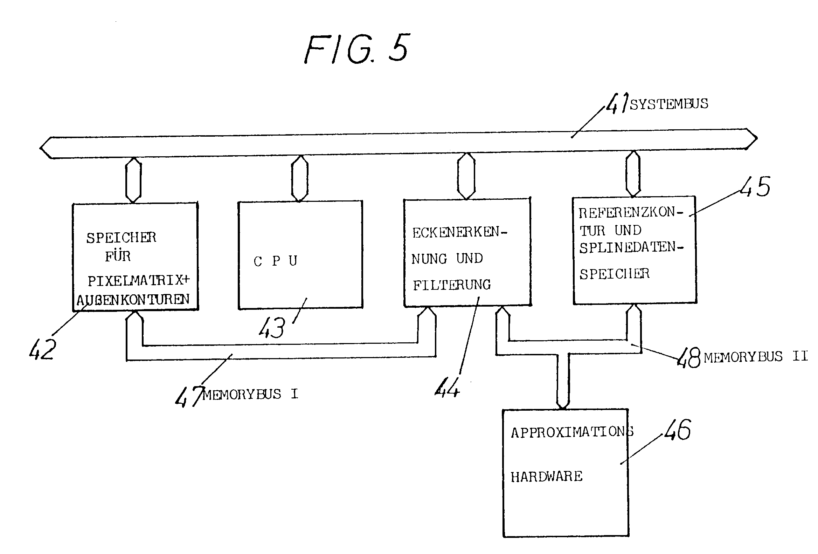

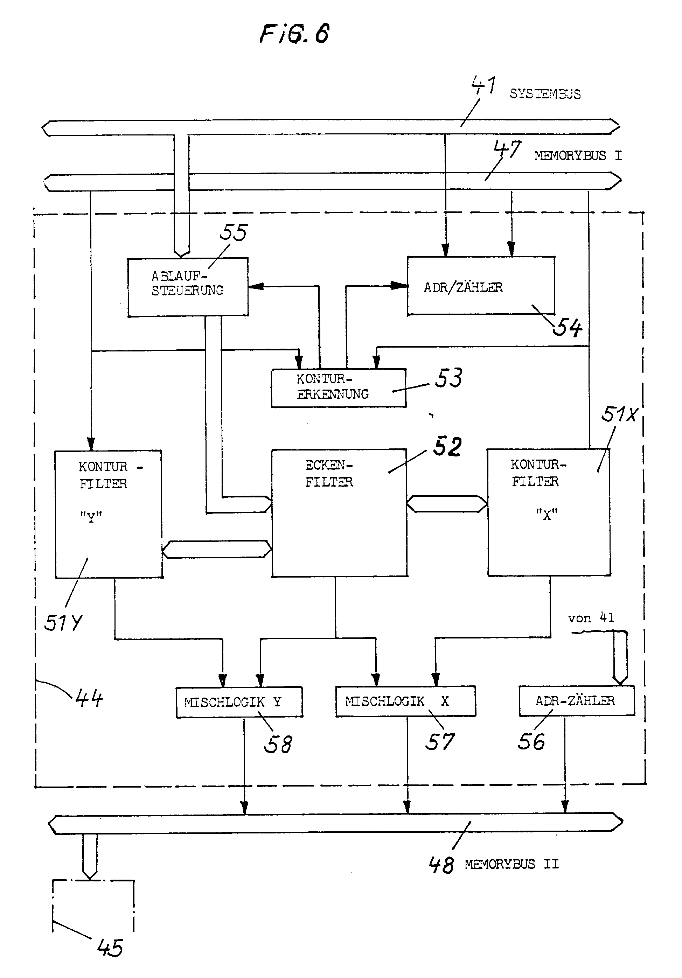

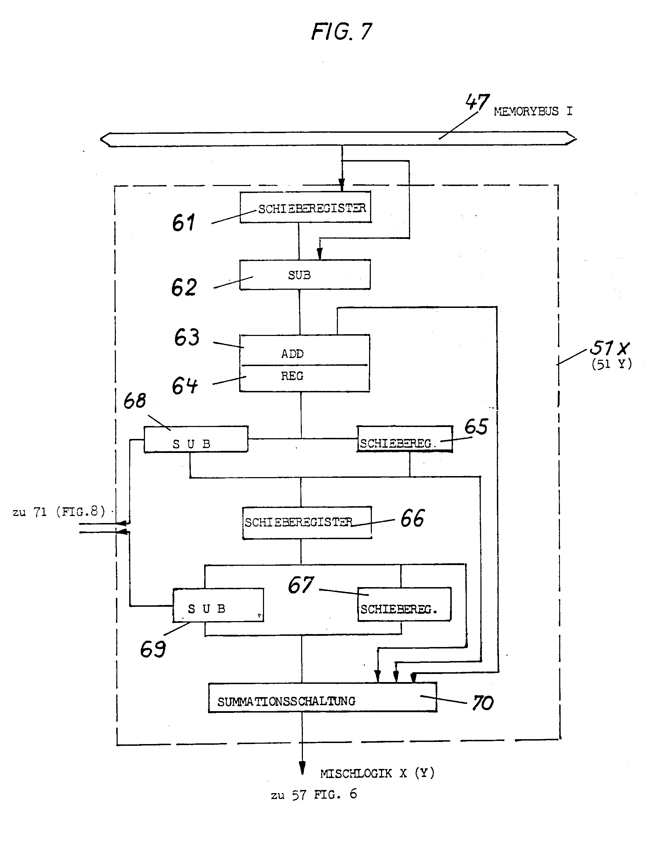

Anhand eines Flußdiagramms nach Fig. 4A und 4B soll das Verfahren für die Generierung von Objekten noch einmal kurz zusammengefaßt werden. Zur Generierung eines Zeichens wird das Zeichen von der Originalvorlage gescannt und die beim Scannen anfallende Pixelmatrix in einem Speicher 42 (s. Fig. 5) gespeichert. Mit Hilfe der CPU wird anschließend eine "Konturverfolgung" durchgeführt und aus der abgelegten Pixelmatrix ein Feld von linearen Außenkonturen erzeugt. Diese Außenkonturen enthalten unter Umständen nicht gewollte Konturpunkte, die mit einer anschließende Filterung eliminiert werden. Außerdem muß die Information über die Ecken hinzugefüft werden. Sowohl die Filterung als auch die Eckenerkennung wird mit einer speziellen Schaltung 44 (s. Fig. 4 und 6) durchgeführt. Die so erzeugten geglätteten Außenkonturen und die hinzugefügte Eckeninformation werden nun als Originalkontur oder Referenzkontur verwendet, um dazu eine approximierende Spline-Kontur zu erzeugen und die zur Erzeugung dieser Kontur notwendigen Spline-Koeffizienten zu bestimmen.

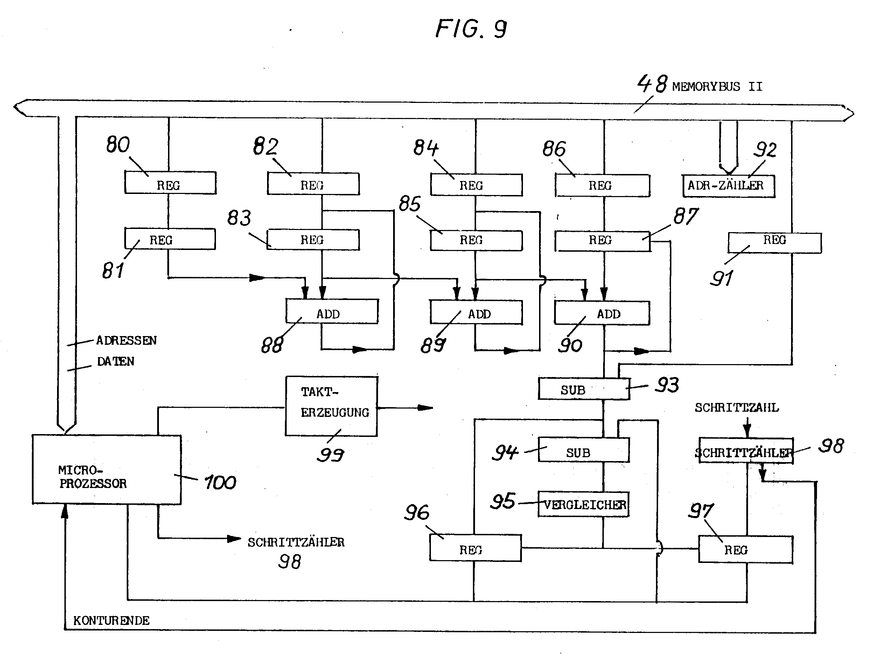

Die Spline-Koeffizienten werden nun so bestimmt, daß, wie oben beschrieben, probeweise, ausgehend von den jeweiligen Eckpunkten eine Gerade gelegt wird. Mit Hilfe dieser Geraden wird daraus eine Kontur berechnet und mit der Referenzkontur verglichen. Gleichzeitig wird die maximale Abweichung festgestellt. Diese maximale Abweichung ist nun der Ort für einen weiteren Stützpunkt der Kurve, sofern diese Abweichung größer ist als die vorgebbare minimale Abweichung. Es werden ausgehend von den so erzeugten Stützpunkten neue Spline-Parameter berechnet und das Vergleichsverfahren erneut durchgeführt und gegebenenfalls am Punkt der maximalen Abweichung ein weiterer Stützpunkt gefunden. Das Verfahren ist dann abgeschlossen, wenn die Stützpunkte so erzeugt wurden, daß die maximale Abweichung kleiner ist als ein vorgegebener Wert. Dieses Approximationsverfahren wird mit Hilfe einer Approximationsschaltung 46 durchgeführt, wie in Fig. 9 dargestellt,und im entsprechenden Text erläutert. Auf diese Weise wird ein Konturteil, der sich von Ecke zu Ecke erstreckt, vollständig approximiert. Es wird nun von der Gesamtkontur ein weiteres Konturteil, sofern dieses vorhanden, d.h. die Gesamtkontur mehrere Ecken besitzt, herangezogen und dieses auf vorher beschriebene Art und Weise approximiert. Sind alle Konturteile auf diese Weise behandelt worden, so ist die Kontur fertig und kann gänzlich abgespeichert werden. Im Anschluß daran wird die nächste Kontur des Zeichens herangezogen und wie vorher beschrieben behandelt, bis alle Konturen des Zeichens approximiert worden sind und das Zeichen in Spline-Kodierung vorliegt.

In Fig. 5 ist eine Vorrichtung zur Generierung von Objekten dargestellt. Das Verfahren zum Generieren und Reproduzieren von zweidimensionalen graphischen Objekten kann beschleunigt ablaufen, wenn dazu eine entsprechende Vorrichtung eingesetzt wird. Eine solche Schaltung, hier in Fig. 5 als Blockdiagramm dargestellt, besteht aus einer alle anderen Komponenten steuernden CPU 43 und zwei Speicherelementen, wovon der eine Speicher 42 die mit Hilfe eines Scanners erzeugten Pixeldaten und die erzeugten Außenkonturen enthält und der andere Speicher 45 die durch eine Schaltung zur Eckenerkennung und Filterung 44 erzeugte geglättete Kontur als auch die endgültige Spline-Daten enthält.

Im weiteren werden die im Speicher 42 befindlichen Außenkonturen von der Schaltung zur Eckenerkennung und Filterung 44, wie weiter unten noch näher in Fig. 6 erläutert wird, so geglättet und bearbeitet, daß im Speicher 45 eine von nicht gewollten Konturpunkten befreite Referenzkontur einschließlich der Information über Ecken dieser Kontur abgelegt wird. Eine Approximationsschaltung 46, die weiter unten noch näher durch die Fig. 9 erläutert wird, benutzt die im Speicher 45 abgelegte geglättete Kontur einschließlich ihrer Information über die Ecken, um daraus die Spline-Daten, d.h. die notwendigen Koeffizienten und zusätzliche Informationen über die Ecken und Anfangspunkte eines Splines zu erzeugen. Alle Speicher und Schaltungen sind über den Systembus 41 gekoppelt und werden von der CPU 43 gesteuert. Im weiteren ist die Schaltung zur Eckenerkennung und Filterung 44 und der Speicher 42 für die Pixelelemente mit Hilfe des Memorybus I 47 verbunden. Außerdem stehen die Schaltung zur Eckenerkennung und Filterung 44, die Approximationsschaltung 46 und der Speicher 45 für die Referenzkontur über Memorybus II 48 in Verbindung.

Die Glättung und Eckenerkennung der Kontur wird mit Hilfe der Schaltung zur Eckenerkennung und Filterung 44 gemäß Fig. 6 durchgeführt. Diese Schaltung enthält einen Adresszähler 54, der vom Systembus aus auf die Anfangsadresse geladen wird, so daß diese Anfangsadresse der Adresse der Konturen im Speicher 42 entspricht. Des weiteren ist ein weiterer Adresszähler 56 installiert, der mit der Anfangsadresse für die sich ergebende geglättete Kontur, genannt Referenzkontur, geladen wird. Die gesamte Schaltung wird durch die Ablaufsteuerung 55 gesteuert, die ihrerseits über den Systembus 41 angestoßen wird. Die Glattung erfolgt derart, daß der Adresszähler 54 selbsttätig eine Adresse an den Memorybus I 47 anlegt und vom Speicher 42 eine entsprechende Konturkoordinate (entweder X oder Y) in die Konturfilter 51X, 51Y geladen wird. In dem Konturfilter 51X werden verschiedene, aufeinanderfolgende Konturpunkte addiert und daraus ein Mittelwert gebildet; entsprechend arbeitet der Konturfilter 51Y. Es werden vier Parialsummen, die aufeinanderfolgen, hergestellt und aus diesen Partialsummen geglättete Differenzen gebildet, außerdem ein Mittelwert über alle vier Partialsummen. Diese Mittelwerte werden dann mittels einer Mischlogik 57, 58 und des Adresszählers 56 an den Speicher 45 über den Memorybus II 48 weitergegeben. Da die Daten neben den eigentlichen Koordinaten außerdem Informationen über den Konturanfang enthalten, wird dieser Konturanfang in einer Konturerkennung 53 festgestellt und am Anfang oder Ende einer Kontur der Adresszähler 54 angehalten und in diesem Fall der Wert, der auf der Anfangs-bzw. Endadresse steht, mehrfach in die Konturfilter 51X oder 51Y geladen, so daß das Anfangs-bzw. Endwertproblem der Filterung damit gelöst ist. Der Gesamtvorgang läuft derart ab, daß die einzelnen Konturpunkte der X- bzw. Y-Koordinaten nacheinander in die Konturfilter 51X bzw. 51Y geladen werden und hier die entsprechenden Mittelwerte gebildet werden. Außerdem wird aus den Differenzquotienten mit Hilfe des Eckenfilters 52 laufend die Krümmung überprüft und festgestellt, ob eine Ecke in der Kontur vorliegt oder nicht. Liegt eine solche Ecke vor, so wird die Information über diese Ecke mit Hilfe der Mischlogik 57 und 58, den gemittelten Konturdaten (Ausgänge von 51X bzw. 51Y) hinzugefügt und die gemittelten Konturen über den Memorybus II 48 im Referenzkontur- und Spline-datenspeicher 45 gespeichert.

In Fig. 7 ist das Konturfilter für X und Y dargestellt, das eine Mittelwertbildung und eine Bildung der Differenzenquotienten der eingeschriebenen Koordinaten in X- oder Y-Richtung gestattet. Die Koordinaten der X- oder Y-Kontur werden in ein Schieberegister 61 fortlaufend eingeschrieben und der aktuelle Wert von dem um N-Werte verzögerten Wert (Ausgang des Schieberegisters 61) in der Substraktionsschaltung 62 subtrahiert. Das so entstehende Inkrement wird im Addierer 63 zum Inhalt eines Registers 64 addiert und dieser Inhalt wiederum im Register 64 abgespeichert. Auf diese Weise entsteht eine gleitende Summe, die die Werte des Schieberegisters 61 zusammenfaßt. In einem Schieberegister 65, ebenso wie in den Schieberegistern 66 und 67, werden die so gewonnenen Mittelwerte um N-Schritte verzögert. Durch Substraktion der Schieberegisterausgänge bzw. des Ausganges des Additionsregisters 64 erhält man mitHilfe von Substrahierern 68, 69 Differenzen, die zur Erkennung der Konturecken benötigt werden. Die Summierung aller Schieberegisterausgänge und des Registerausganges 64 wird mit Hilfe der Summationsschaltung 70 durchgeführt, so daß am Ausgang der Summationsschaltung 70 ein Mittelwert über alle vier Partialsummen, die in den Registern 64, 65, 66 und 67 zur Verfügung stehen, anfällt.

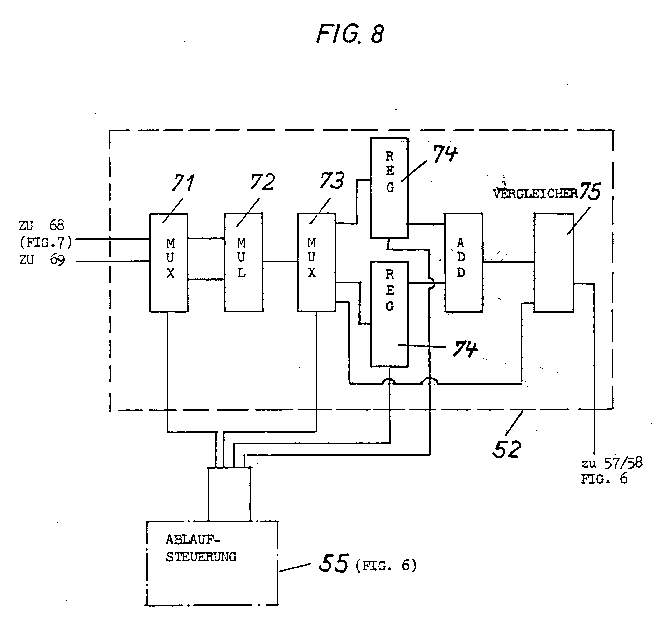

Fig. 8 zeigt eine Schaltung für das Eckenfilter gemäß Fig. 6. Zur Erkennung der Konturecken werden je zwei aufeinanderfolgende gemittelte Differenzen der X- und Y-Kontur herangezogen. Mit Hilfe dieser Differenzen wird ein den Krümmungsradius approximierender Ausdruck hergestellt. Dies geschieht mit Hilfe des Eckenfilters 52. Es werden hier die Differenzen der X- bzw. Y-Kontur kreuzweise multipliziert und mit dem Produkt der aufeinanderfolgenden gemittelten Differenzen in Y-Richtung verglichen. Die Multiplikation erfolgt mit Hilfe des Multiplizierers 72. Die Multiplikationsergebnisse werden in dem Registern 74 gespeichert und dann mit den Ergebnis des Produktes der aufeinanderfolgenden Y-Differenzen im Vergleicher 75 verglichen. Die Steuerung des ganzen Vorganges erfolgt mit Hilfe der Ablaufsteuerung 55 (Fig. 6). Mit Hilfe dieser Steuerung 55 werden die Multiplexer 71 bzw. 73 so gesteuert, daß die entsprechenden Produkte nacheinander berechnet und in den Registern 74 abgespeichert werden.

In der Fig. 9 wird die Approximationsschaltung 46 näher beschrieben, wobei sie nur für eine Koordinate dargestellt ist. Mit Hilfe der Approximationsschaltung wird bei gegebenen Spline-Koeffizienten eine diesen Koeffizienten zugeordnete Kurve mit den Registern und Addierern 80 bis 90 berechnet und die Abweichung zu der Referenzkontur, die im Register 91 gespeichert ist, im Differenzbildner 93 festgestellt. Auch hier werden die Koordinaten der durch die Spline-Koeffizienten vorgegebene Kurve mittels des oben beschriebenen Verfahrens ermittelt, das auf einer Matrizendarstellung des betrachteten Polynoms basiert, wobei die Matrix mit Hilfe einer Jordanschen Transformation geeignet transformiert wurde.

Dadurch können die Koordinaten in festen Schrittweiten durch einfache Addition von Startwerten bestimmt werden. Mit Hilfe des Subtrahierers 94, des Vergleichers 95 und des Registers 96 wird die maximale Abweichung zwischen der Kurve und der Referenzkontur festgestellt und im Register 96 der zu dieser maximalen Abweichung gehörige Parameterwert festgehalten. Der Mikroprozessor 100 berechnet aus den vorher vorliegenden Werten und der maximalen Abweichung bzw. dem dazugehörigen Parameterwert die Spline-Koeffizienten für eine verbesserte Approximation. Liegen die Koeffizienten für eine approximierende Kurve vor, so werden diese Koeffizienten mit Hilfe des Mikroprozessors 100 in die Register 80, 82, 84 und 86 eingeschrieben und in den Registern 81, 83, 85 und 87 ebenfalls aufbewahrt. Mittels der Addierer 88, 89, 90 wird nun eine fortlaufende Mehrfach-Summation durchgführt und das Ergebnis dieser Mehrfach-Summation im Differenzbildner 93 mit der Referenzkontur durch Bildung der Differenz verglichen. Die Differenz, die eine Abweichung darstellt, wird über den Subtrahierer 94 und den Vergleicher 95 mit der einen Schritt vorher vorliegenden Abweichung verglichen und im Falle, daß die Abweichung größer ist als die vorherige im Register 96 gespeichert, wobei der durch durch den Schrittzähler 98 zugeordnete Schritt im als Schrittspeicher ausgebildeten Schrittregister 97 ebenfalls gespeichert wird. Für den Fall, daß die Abweichung größer als die vorherige ist, wird gleichzeitig der im Schrittzähler 98 anfallende Parameterwert dieser Abweichung im Register 97 festgehalten. Dieser Vorgang wird solange wiederholt, bis der Schrittzähler 98 abgelaufen ist, d.h. die durch die Spline-Koeffizienten vorgegebene Kurve vollständig mit der Referenzkontur verglichen wurde. Der Mikroprozessor 100 liest die Ergebnisse in den Registern 96 und 97, vergleicht die im Register 96 gespeicherte maximale Abweichung mit einem vorgegebenen Wert und setzt, sofern diese Abweichung größer ist als der zulässige Wert, einen neuen Konturpunkt. Mit Hilfe dieses Punktes und dem bereits vorliegenden Punkt werden neue Spline-Koeffizienten berechnet und später in die Register 80 bis 86 eingeschrieben. Aufgrund dessen, daß die Kontur mit Hilfe der Register und Addierer 80 bis 90 selbsttätig berechnet wird und mit Hilfe des Adresszählers 92 die Referenzkontur selbsttätig über den Memorybus 48 zum Vergleich herangezogen werden kann, kann die Berechnung der neuen Spline-Koeffizienten mit Hilfe des Mikroprozessors 100 parallel zur Berechnung einer anderen Kontur stattfinden. Dadurch wird ein besonderer Geschwindigkeitsvorteil aufgrund dieser Pipelinestruktur erzielt.

Die Schaltung aus den Registern und Addierern 80 bis 90 dient bei der Dekodierung der Zeichen dazu, die dann zu erzeugenden Konturpunkte der Konturen der Zeichen mit besonders hoher Geschwindigkeit zu bestimmen. Somit wird bei der beschriebenen Generierung der Kontur eine besonders schnelle Dekodierung der kodierten Objekt erzielt.

**Patentansprüche**

1. Verfahren zum Generieren von zweidimensionalen graphischen Objekten für die elektronische oder elektromechanische Wiedergabe unter Verwendung von Polynomen, wobei die graphischen Objekte als Referenzkonturen in Konturkoordinaten vorgegeben, die Anzahl von Konturen (2,3,4) pro Objekt und die Anzahl der Konturteile (5-11) pro Kontur bestimmt und die Anfangs- und Endpunkte der Konturteile festgelegt werden, die Länge jedes vorgegebenen Konturteils (5-11) in eine Mehrzahl von Bogenteilen aufgeteilt wird und die Anfangs- und Endpunkte des vorgegebenen Konturteils durch ein definiertes Kurvenstück vorzugsweise ein Geradenstück (15) verbunden werden, dessen Länge in die gleiche Anzahl von Bogenteilen eingeteilt wird wie das vorgegebene Konturteil (6), dadurch gekennzeichnet, daß die den jeweiligen Bogenteilen zugeordneten Koordinatenpunkte des Geradenstücks (15) und des vorgegebenen Konturteils (6) verglichen werden und der Abstand zwischen ihnen festgestellt wird, daß bei Überschreiten eines vorgegebenen Abstandes derjenige Koordinatenpunkt (17) auf dem vorgegebenen Konturteil (6) ausgewählt wird, der den größten Abstand zum Geradenstück (15) aufweist, daß eine Kurve zwischen dem Anfangs- und Endpunkt (13,14) und dem ausgewählten Punkt (17) als Stückpunkt unter Verwendung von parametrischen Spline-Funktionen bestimmt wird, daß die Länge der Spline-Kurve in die gleiche Anzahl von Bogenteilen wie das vorgegebene Konturteil (6) eingeteilt und die jeweiligen den Bogenteilen zugeordneten Koordinatenpunkte der bestimmten Spline-Kurve (18) und des vorgegebenen Konturteils verglichen werden, der Abstand zwischen ihnen festgestellt und bei Überschreiten des vorgegebenen Abstandes derjenige Koordinatenpunkt (20) auf dem vorgegebenen Konturteil als weiterer Stückpunkt ausgewählt wird, der den größten Abstand aufweist, und daß die vorhergehenden Schritte solange wiederholt werden, bis der vorgegebene Abstand nicht mehr überschritten wird.

2. Verfahren nach Anspruch 1, dadurch gekennzeichnet, daß die Anfangs- bzw. Endpunkte (13,14) und die ausgewählten Stützpunkte (17,20) jedes Konturteils (6) sowie die Länge der Bogenteile zwischen den Stützpunkten (13,14,17,20) gespeichert werden.

3. Verfahren nach Anspruch 1 oder 2, dadurch gekennzeichnet, daß bei gleichem Anfangs- und Endpunkt des Konturteils das Geradenstück in einen Punkt übergeht.

4. Verfahren nach einem der Ansprüche 1 bis 3, dadurch gekennzeichnet, daß bei glatten geschlossenen Konturen (26) periodische Spline-Funktionen verwendet werden.

5. Verfahren nach einem der Ansprüche 1 bis 3, dadurch gekennzeichnet, daß bei nicht glatten Konturen (25) natürliche Spline-Funktionen verwendet werden.

6.  Verfahren nach einem der Ansprüche 1 bis 5, dadurch gekennzeichnet, daß die Anfangs- und Endpunkte (12,13,14,21,22) der Konturteile (5,6,7,26, 28) automatisch oder manuell abhängig von der Krümmung in den Koordinatenpunkten der Referenzkontur (6) und der Krümmungsänderung festgelegt werden und daß alle Geradenstücke der Referenzkontur (6) als solche erfaßt werden.

7.  Verfahren nach einem der Ansprüche 1 bis 6, dadurch gekennzeichnet, daß eine von einem Scanner oder einer anderen digitalen Datenquelle gelieferte Referenzkontur (5,6,7) durch ein Mittelungsverfahren über benachbarten Konturpunkte geglättet wird.

8.  Verfahren nach einem der Ansprüche 1 bis 7, dadurch gekennzeichnet, daß die Länge der Bogenteile so normiert ist, daß bei ganzzahliger Berechnung der Konturpunkte keine Lücken in der Kontur auftreten können.

9.  Vorrichtung zum Generieren von zweidimensionalen graphischen Objekten für die elektronische oder elektromechanische Wiedergabe unter Verwendung von Polynomen, wobei die graphischen Objekte als Referenzkonturen in Konturkoordinaten vorgegeben, die Anzahl von Konturen (2,3,4) pro Objekt und die Anzahl der Konturteile (5-11) pro Kontur bestimmt und die Anfangs- und Endpunkte der Konturteile festgelegt werden, die Länge des vorgegebenen Konturteils (5-11) in eine Mehrzahl von Bogenteilen aufgeteilt wird und die Anfangs- und Endpunkte des vorgegebenen Konturteils durch ein definiertes Kurvenstück vorzugsweise ein Geradenstück (15) verbunden werden, dessen Länge in die gleiche Anzahl von Bogenteilen eingeteilt wird wie das vorgegebene Konturteil (6), mit einer Steuereinheit (43) und einem Speicher (42) zur Speicherung der Innen- und Außenkonturen eines Objekts in Form einer gescannten Pixelmatrix, dadurch gekennzeichnet, daß ein Speicher (45) zur Speicherung der Referenzkontur und der Splinedaten, eine Schaltung zur Eckenerkennung und Filterung (44), in der die Ecken festgelegt und die gescannte Kontur zur Bestimmung der Referenzkontur geglättet werden und eine Approximationsschaltung vorgesehen sind, in der die jeweiligen Referenzkonturteile durch Splinekurven angenähert werden, vorgesehen sind.

10. Vorrichtung nach Anspruch 9, dadurch gekennzeichnet, daß die Schaltung zur Eckenerkennung und Filterung (44) zwei Adreßzähler (54,56), die jeweils mit einer der Adresse der in dem Speicher (42) gespeicherten gescannten Außenkontur entsprechenden Anfangsadresse und einer Anfangsadresse für die Referenzkontur geladen werden, für jede Koordinate ein Konturfilter (51X,51Y) zur Mittelwertbildung und Bildung von Differenzen und ein Eckenfilter (52) zur Überprüfung der Krümmung mit Hilfe der Differenzen und eine Ablaufsteuerung (55) zur Steuerung der Vorgänge aufweist.

11. Vorrichtung nach Anspruch 10, dadurch gekennzeichnet, daß jedes Konturfilter (51X,51Y) ein Schieberegister (61), in das die zugeordnete Koordinate der gescannten Kontur eingeschrieben wird, eine Subtraktionsschaltung (62) zur Bildung von Differenzen zwischen den aktuellen und einer um N-Werte verzögerten Koordinate, einen Addierer (63) mit Register (64) zur Bildung von gleitenden Summen, eine Mehrzahl von Schieberegistern (65,66,67) zur Speicherung von um N-Schritte verzögerten Mittelwerten und eine Summationsschaltung zur Summierung der Ausgänge der Mehrzahl von Schieberegistern (65,66,67) und des Registers (64) aufweist.

12. Vorrichtung nach Anspruch 10 oder 11, dadurch gekennzeichnet, daß das Konturfilter (51X,51Y) weiterhin Subtrahierer (68,69) enthält, in denen Differenzen zwischen den Inhalten der Register (64,65) bzw. der Schieberegister (66,67), die die gebildeten Mittelwerte enthalten, ermittelt werden, wobei die Differenzen dem Eckenfilter (52) zugeführt werden.

13. Vorrichtung nach einem der Ansprüche 9 bis 12, dadurch gekennzeichnet, daß das Eckenfilter (52) einen Multiplizierer (72), in dem die Differenzen der X- bzw. Y-Kontur kreuzweise multipliziert werden, wobei die Multiplikationsergebnisse in Registern (74) gespeichert werden, und einen Vergleicher (75) zum Vergleich der Multiplikationsergebnisse mit dem Ergebnis des Produktes der aufeinanderfolgenden Y-Differenzen aufweist.

14. Vorrichtung nach Anspruch 9, dadurch gekennzeichnet, daß die Approximationsschaltung (46) eine Additionsschaltung aus Registern und Addierern (80 bis 90) aufweist, mit der aus den von einem Mikroprozessor (100) ermittelten Polynomkoeffizienten bzw. den dem eigentlichen Funktionswert des Polynoms und den Differenzen 1., 2. und 3. Ordnung entsprechenden Startwerten die Koordinaten bestimmt werden.

**15.** Vorrichtung nach Anspruch 14, dadurch gekennzeichnet, daß in der Approximationsschaltung (46) weiterhin eine Vergleichsschaltung (93,94,95) zum Vergleich der jeweiligen Koordinaten der angenäherten Kontur mit den in einem Register (91) gespeicherten Koordinaten der Referenzkontur vorgesehen ist, wobei die jeweilige Abweichung in einem Register (96) gespeichert wird und die Vergleichsschaltung (93,94,95) die Abweichungen zweier aufeinanderfolgender Koordinaten vergleicht und die größere Abweichung im Register (96) festgehalten wird.

**16.** Vorrichtung nach Anspruch 15, dadurch gekennzeichnet, daß ein Schrittzähler (98) und ein Schrittspeicher (97) vorgesehen sind, die eine Zuordnung zwischen im Register (96) gespeicherter Abweichung und der zugehörigen Koordinate vornehmen.

**17.** Verfahren zum Reproduzieren von zweidimensionalen graphischen objekten, die entsprechend dem Verfahren nach Anspruch 1 und 2 definiert sind,
**dadurch gekennzeichnet,**
daß die für jede Kontur (5,6,7) gespeicherten Stützpunkte (12,13,14,17,20,21-24) der Konturteile und die Länge der Bogenteile zwischen jeweils zwei Stützpunkten je nach gewünschter Größenänderung, Stauchung oder Expandierung, Drehung, Oblique Angle linear transformiert werden, daß mit Hilfe kubischer Spline-Funktionen unter Vorgabe der Stützpunkte die Koeffizienten der von den Bogenteilen abhängigen Spline-Polynome 3. Ordnung x (t), y (t) wie bekannt bestimmt werden, daß die Koeffizienten der Spline-Polynome so in Startwerte eines Additionsalgorithmus umgewandelt werden, die jeweils den eigentlichen Funktionswert des Polynoms und den Differenzenquotienten 1., 2. und 3. Ordnung an der Stelle t = 0 enthalten, und daß die Berechnung jedes weiteren Konturpunkts des Konturteils durch fortgesetzte Addition erfolgt.

## Claims

**1.** Method of generating two-dimensional graphic objects for electronic or electromechanical reproduction using polynoms, wherein the graphic objects are given as reference contours in contour coordinates, the number of contours (2, 3, 4) per object and the number of contour portions (5-11) per contour are specified, and the starting and end points of the contour portions are determined, the length of each given contour portion (5-11) is divided into a plurality of curved sections and the starting and end points of the given contour portion are connected by a defined curved element, preferably a straight element (15) the length of which is divided into the same number of curved sections as the given contour portion (6), **characterised in that** the coordinate points of the straight element (15) and of the given contour portion (6), which are associated with the respective curved sections, are compared and that the distance between them is determined, that on exceeding a given distable the coordinate point (17) on the given contour portion (6) at the greatest distance to the straight element (15) is chosen, that a curve between the starting and the end point (13, 14) and the chosen point (17) is determined as a support point by way of parametric spline functions, that the length of the spline curve is divided into the same number of curved sections as the given contour portion (6), and that the respective coordinate points, which are associated with the curved sections, of the determined spline curve (18) and of the given contour portion are compared, that the distance between them is determined and, on exceeding the given distance, the coordinate point (2Ø) with the greatest distance on the given contour portion is selected as a further support point, and that the above steps are repeated until the given distance can no longer be exceeded.

**2.** Method according to claim 1, **characterised in that** the starting or end points (13, 14) and the selected support points (17, 2Ø) of each contour portion (6) as well as the length of the curved sections between the support points (13, 14, 17, 2Ø) are stored.

**3.** Method according to claim 1 or 2, **characterised in that**, in the event of the same starting and end point of the the contour portions, the straight section merges into one point.

**4.** Method according to one of claims 1 to 3, **characterised in that**, in the event of smooth closed contours (26), periodic spline functions are applied.

**5.** Method according to one of claims 1 to 3, **characterised in that**, in the event on uneven contours (25), natural spline functions are applied.

**6.** Method according to one of claims 1 to 5, **characterised in that** the starting and end points (12, 13, 14, 21, 22) of the contour portions (5, 6, 7, 26, 28) are determined automatically or manually in dependence on the curvature in the coordinate points of the reference contour (6) and the curvature change, and that all straight elements of the reference contour (6) are determined as such.

**7.** Method according to one of claims 1 to 6, **characterised in that** a reference contour (5, 6, 7) delivered by a scanner or another digital data source is smoothed by an averaging process via adjacent contour points.

**8.** Method according to one of claims 1 to 7, **characterised in that** the length of the curved sections is normed in such a manner that no gaps can appear in the contour in the event of integral computation of the contour points.

**9.** Device for generating two-dimensional graphic objects for electronic or electromechanical reproduction using polynoms, wherein the graphic objects are given as reference contours in contour coordinates, the number of contours (2, 3, 4) per object and the number of contour portions (5-11) are specified, and the starting and end points of the contour sections are determined, the length of each given contour portion (5-11) is divided into a plurality of curved sections and the starting and end points of the given contour portion are connected by a defined curve element, preferably a straight element (15) the length of which is divided into the same number of curved sections as the given contour portion (6), comprising a control unit (43) and a store (42) for storing the inside and outside contours of an object in the form of a scanned pixel matrix, **characterised in that** a store (45) for storing the reference contour and the spline data, a circuit for corner detection and filtering (44) wherein the corners are determined and the scanned contour is smoothed for determination of the reference contour, and an approximation circuit are provided, wherein the respective reference contour portions are approximated by way of spline curves.

**10.** Device according to claim 9, **characterised in that** the circuit for corner detection and filtering (44) comprises two address counters (54, 56), which are loaded with a starting address which corresponds with the address of the scanned outside contour stored in the store (42) and with a starting address for the reference contour, for each coordinate a contour filter (15X, 51Y) for establishing a mean value and forming differences, and a corner filter (52) for checking the curvature by means of differences, and a operational control (55) for controlling the processes.

**11.** Device according to claim 1∅, **characterised in that** each contour filter (51X, 51Y) comprises a slide register (61) into which is written the associated coordinate of the scanned contour, a subtraction circuit (62) for forming differences between actual coordinates and those delayed by N-values, an adder (63) with register (64) for forming floating sums, a plurality of slide registers (65, 66, 67) for storing mean values delayed by N-steps, and a summation circuit for summing the outputs of the plurality of slide registers (65, 66, 67) and the register (64).

**12.** Device according to claim 1∅ or 11, **characterised in that** the contour filter (51X, 51Y) further comprises a subtracter (68, 69) which determines differences between the contents of the registers (64, 65) or the slide registers (66, 67) which hold the established mean values, and wherein the differences are fed to the corner filter (52).

**13.** Device according to one of claims 9 to 12, **characterised in that** the corner filter (52) comprises a multiplier (72), wherein the differences of the X- or Y-contour are cross-multiplied, wherein the multiplication results are stored in registers (74), and a comparator (75) for comparing the multiplication results with those of the product of successive Y-differences.

**14.** Device according to claim 9, **characterised in that** the approximation circuit (46) comprises an addition circuit of registers and adders (8∅ to 9∅), by means of which the coordinates are determined from polynom coefficients determined by a microprocessor (1∅∅) or from respective starting values corresponding with the actual operational value of the polynom and the differences of the 1st, 2nd and

3rd order.

**15.** Device according to claim 14, **characterised in that** the approximation circuit (46) is further provided with a comparative circuit (93, 94, 95) for comparing respective coordinates of the approximated contour with coordinates of the reference contour which are stored in a register (91), wherein a respective deviation is stored in a register (96) and the comparative circuit (93, 94, 95) compares the deviation of two successive coordinates, and that the greater deviation is held in the register (96).

**16.** Device according to claim 15, **characterised in that** a step counter (98) and a step store (97) are provided which carry out an association between a deviation stored in the register (96) and the associated coordinate.

**17.** Method of reproducing two-dimensional graphic objects which are defined according to the method of claim 1 and 2**, characterised in that** support points (12, 13, 14, 17, 2∅, 21-24) of the contour portions, which are stored for each contour (5,6,7), and the length of the curved elements between two respective support points are linearly transformed according to a desired change in size, compression or expansion, rotation or oblique angle, that the coefficients of the curved section dependent spline polynoms of the 3rd order x (t), y (t) are determined in a conventional manner by means of cubic spline functions with given support points, that the coefficients of the spline polynoms are converted into starting values of an addition algorithm which include the actual operational value of the polynom and the differential quotient of the 1st, 2nd and 3rd order in place t = o, and that the computation of each further contour point of the contour portion is carried out by continued addition.

**Revendications**

**1.** Procédé pour générer des objets graphiques à deux dimensions pour la reproduction électronique ou électro-mécanique, avec utilisation de polynômes, lesdits objets graphiques étant prédéterminés dans des coordonnées de contour servant de contours de référence, le nombre de contours (2, 3, 4) par objet et le nombre de parties de contour (5 à 11) par contour étant déterminés, les points initiaux et finaux des parties de contour étant définis, la longueur de chaque partie prédéterminée (5 à 11) de contour étant divisée en une pluralité de parties de courbe et les points initiaux et finaux de la partie de contour prédéterminée étant reliés par un tronçon de courbe défini, de préférence un tronçon de droite (15) dont la longueur est divisée en un nombre de parties de courbe identique à celui de la partie prédéterminée de contour (6), caractérisé en ce que les points de coordonnées du tronçon de droite (15) et de la partie prédéterminée de contour (6) associés aux parties de courbe respectives sont comparés et que leur distance mutuelle est constatée, en ce qu'en cas de dépassement d'une distance prédéterminée, on choisit le point de coordonnée (17) sur la partie prédéterminée (6) du contour qui présente la distance la plus grande par rapport au tronçon de droite (15), en ce qu'une courbe est déterminée entre le point initial et le point final (13, 14) et le point choisi (17), avec utilisation de fonctions paramétriques de Spline, en ce que la longueur de la courbe de Spline est divisée en un même nombre de parties de courbe, que la partie prédéterminée (6) de contour et que les points de coordonnées associés respectivement aux parties de la courbe de Spline définie (18) et de la partie prédéterminée de contour sont comparés entre eux, en ce qu'on relève la distance mutuelle et, en ce qu'en cas de dépassement de la distance prédéterminée, on choisit, pour servir de point d'appui suivant, le point de coordonnées (30) placé sur la partie de courbe prédéterminée qui présente la distance la plus grande, et en ce que les opérations précédentes sont répétées un nombre de fois suffisant pour que la distance prédéterminée ne soit plus dépassée.

**2.** Procédé selon la revendication 1, caractérisé en ce que les points initiaux et finaux (13, 14) et les points d'appui choisis (17, 20) de chaque partie de contour (6), ainsi que la longueur des parties de courbes entre lesdits points d'appui (13, 14, 17, 20) sont mis en mémoire.

**3.** Procédé selon la revendication 1 ou 2, caractérisé en ce que si le point initial et le point final de la partie de contour sont identiques, le tronçon de droite devient un point.

**4.** Procédé selon l'une des revendications 1 à 3, caractérisé en ce qu'en cas de contours (26) lisses et fermés, on utilise des fonctions de Spline périodiques.

**5.** Procédé selon l'une des revendications 1 à 3, caractérisé en ce qu'en cas de contours (25) non lisses, on utilise des fonctions de Spline naturelles.

**6.** Procédé selon l'une des revendications 1 à 5, caractérisé en ce que les points initiaux et terminaux (12, 13, 14, 21, 22) des parties de contour (5, 6, 7, 26, 28) sont automatiquement ou manuellement déterminées en fonction de la courbure aux points des coordonnées du contour de référence (6) et de la variation de cette courbure, et en ce que tous les tronçons de droite du contour de référence (6) sont saisis en tant que tels.

**7.** Procédé selon l'une des revendications 1 à 6, caractérisé en ce qu'un contour de référence (5, 6, 7) fourni par un scanner ou une autre source de données numériques est lissé par un procédé de médiation passant par des points adjacents du contour.

**8.** Procédé selon l'une des revendications 1 à 7, caractérisé en ce que la longueur des parties de courbe est normalisée de telle sorte que si le calcul des points de contour s'effectue sans décimale, aucune rupture de son tracé ne peut apparaître dans le contour.

**9.** Dispositif pour générer des objets graphiques à deux dimensions pour la reproduction électronique ou électro-mécanique, avec utilisation de polynômes, lesdits objets graphiques étant prédéterminés sous la forme de contours de référence dans des coordonnées de contour, le nombre de contours (2, 3, 4) par objet et le nombre de parties de contour (5 à 11) par contour étant déterminés, et les points initiaux et finaux des parties de contour étant définis, la longueur de chaque partie de contour prédéterminée (5 à 11) étant divisée en une pluralité de parties de courbe, et les points initiaux et finaux de partie de contour prédéterminé étant reliés par un tronçon de courbe défini, de préférence, par un tronçon de droite (15) dont la longueur est divisée en un même nombre de parties de courbe que la partie de contour prédéterminée (6), comportant une unité de commande (43) et une mémoire (42) pour la mémorisation des contours intérieurs et extérieurs d'un objet sous la forme d'une matrice de pixels scannerisée, caractérisé par la présence d'une mémoire (45) pour la mémorisation du contour de référence et des données de Spline par un circuit pour la détection des angles et le filtrage (44) dans lequel sont définis les angles et le contour scannerisés lissés pour la détermination du contour de référence, et par un circuit d'approximation dans lequel sont définis approximativement par des courbes de Spline les tronçons respectifs du contour de référence.

**10.** Dispositif selon la revendication 9, caractérisé en ce que le circuit pour la détection des angles et le filtrage (44), comprend deux compteurs d'adresses (54, 56) qui sont chargés chacun d'une adresse initiale correspondant à l'adresse du contour extérieur scannerisé, mémorisé dans la mémoire (42) et d'une adresse initiale pour le contour de référence, un filtre de contour (51X, 51Y) pour chaque coordonnée pour la formation de la valeur moyenne et la formation de différences, un filtre d'angle (52) pour la vérification de la courbure à l'aide des différences, et une commande de déroulement (55) pour la commande des procédures successives.

**11.** Dispositif selon la revendication 10, caractérisé en ce que chaque filtre de contour (51X, 51Y) présente un registre de décalage (61) dans lequel est inscrite la coordonnée subordonnée au contour scannerisé, un circuit de soustraction (62) pour la formation de différences entre les coordonnées effectives et une coordonnée retardée de valeurs N, un sommateur (63) à registre (64) pour la formation de sommes flottantes, une pluralité de registres de décalage (65, 66, 67) pour la mémorisation de moyennes retardées d'un nombre N de pas, et un circuit sommateur pour la sommation des sorties des registre de décalage (65, 66, 67) ainsi que du registre (64).

**12.** Dispositif selon la revendication 10 ou 11, caractérisé en ce que le filtre de contour (51X, 51Y) contient en outre un soustracteur (68, 69) dans lequel sont obtenus les différences entre les contenus des registres (64, 65) ou des registres de décalage (66, 67) qui contiennent les valeurs moyennes formées, ces différences étant dirigées vers le filtre d'angle (52).

**13.** Dispositif selon l'une des revendications 9 à 12, caractérisé en ce que le filtre d'angle (52) présente un multiplicateur (72) dans lequel sont multipliées, de manière croisée, les différences du contour X ou du contour Y, les résultats de cette multiplication étant mémorisés dans des registres (74), ainsi qu'un comparateur (75) pour la comparaison des résultats de la multiplication avec le résultat du produit des différences (Y) consécutives.

14. Dispositif selon la revendication 9, caractérisé en ce que le circuit d'approximation (46) comprend un circuit de sommation fait de registres et de sommateurs (80 à 90) à l'aide duquel sont déterminées les coordonnées à partir des coefficients polynômiques calculés par un micro-processeur (100) ou à partir des valeurs initiales qui correspondent à la valeur de la fonction véritable du polynôme et aux différences de premier, deuxième et troisième ordres.

15. Dispositif selon la revendication 14, caractérisé en ce que dans le circuit d'approximation (46) est prévu, en outre, un circuit de comparaison (93, 94, 95) pour comparer les coordonnées respectives du contour approché aux coordonnées du contour de référence mémorisées dans un registre (91), l'écart respectif étant mémorisé dans une mémoire (96) et le circuit de comparaison (93, 94, 95) comparant les écarts entre deux coordonnées consécutives et conservant l'écart le plus grand dans le registre (96).

16. Dispositif selon la revendication 15, caractérisé par la présence d'un compteur pas à pas (98) et d'une mémoire pas à pas (97), lesquels procèdent à l'association entre l'écart mémorisé dans le registre (96) et la coordonnée correspondante.

17. Procédé pour la reproduction d'objets graphiques à deux dimensions, qui sont définis selon le procédé conforme à la revendication 1 et à la revendication 2, caractérisé en ce que les points d'appui (12, 13, 14, 17, 20, 21, 24) mémorisés pour chaque contour (5, 6, 7) des parties de contour, ainsi que la longueur des parties de courbe entre respectivement deux points d'appui, sont transformés linéairement selon la variation de grandeur, la compression ou la dilatation, la rotation, l'angulation oblique souhaitées, en ce qu'à l'aide de fonction de Spline cubiques avec prédétermination des points d'appui, sont déterminés les coefficients des polynômes de Spline de troisième ordre x (t), y (t) tels qu'ils sont connus en fonction des parties de courbe, en ce que les coefficients des polynômes de Spline sont ainsi transformés en valeurs initiales d'un algorithme d'addition, valeurs initiales qui contiennent, respectivement, la valeur de fonction véritable du polynôme et le quotient des différences de premier, deuxième et troisième ordres au point t = 0, et en ce que le calcul de chaque point suivant de partie de contour s'effectue par addition continue.

Fig. 1

# Fig. 2

# Fig. 3

# FIG.4A

```
                    ┌──────────────┐
                   (    START      )
                    └──────────────┘
                            │
                            ▼
              ╱─────────────────────────╲
             ╱  GESCANNTES ZEICHEN ALS    ╲
            ╱   PIXELMATRIX ABGELEGT       ╲
           ╱───────────────────────────────╲
                            │
                            ▼
                  ┌──────────────────┐
                  │ KONTUR.VERFOLGUNG │
                  └──────────────────┘
                            │
                            ▼
              ╱─────────────────────────╲
             ╱  ZEICHEN ALS LINEARES      ╲
            ╱  FELD VON AUSSENKONTUREN     ╲
           ╱───────────────────────────────╲
                            │
        ┌───────────────────┼──────────────────┐
        │                   ▼                   │
        │         ┌──────────────────┐          │       44
        │         │    FILTERUNG      │          │
        │         └──────────────────┘          │
        │                   │                   │
        │                   ▼                   │
        │     ╱─────────────────────────╲       │
        │    ╱  ZEICHEN MIT GEGLÄTTETEN   ╲      │
        │   ╱   AUSSENLINIENKONTUREN       ╲     │
        │  ╱───────────────────────────────╲    │
        │                   │                   │
        │                   ▼                   │
        │         ┌──────────────────┐          │
        │         │  ECKENERKENNUNG   │          │
        │         └──────────────────┘          │
        └───────────────────┼──────────────────┘
                            │
                            ▼
              ╱─────────────────────────────╲
             ╱ FOLGE VON MIT ECKENINFOR-      ╲
            ╱  MATIONEN VERS.,GEGLÄTTETEN      ╲
           ╱   AUSSENLINIENKONTUREN            ╲
          ╱─────────────────────────────────────╲
                            │
                            ▼
                  ┌──────────────────┐
                  │    ZERLEGUNG      │
                  └──────────────────┘
                            │
                            ▼
```

# FIG. 4 B

```
                    ┌─────────────────────────┐
                    │ IN KONTURTEILE VON ECKE  │
                    │ ZU ECKE ZERLEGTE AUSSEN- │◄───────────┐
                    │   KONTUREN               │            │
                    └─────────────────────────┘            │
┌──────────────────┐         │                             │
│ NÄCHSTE REFERENZ │  ┌──────┼──────────────────────────┐  │
│ KONTUR DES       │  │      ▼                           │  │
│ ZEICHENS HOLEN   │  │ ┌──────────────────────────┐    │  │
└──────────────────┘  │ │ ERMITTLUNG DER SPLINEPARA-│◄──────────┐
        ▲             │ │ METER AUS ECKEN UND       │    │  │    │
        │             │ │ STÜTZPUNKTEN              │    │  │    │
        │             │ └──────────────────────────┘    │  │    │
        │             │      │                           │  │    │
        │             │      ▼                    ┌──────────────┐
        │             │ ┌──────────────────────┐  │ NEUEN STÜTZ- │
        │             │ │ AUSWERTUNG DER SPLINE-│  │ PUNKT EINFÜ- │
        │             │ │ KONTUR MIT HILFE DES  │  │ GEN          │
        │             │ │ ADDITIONS-VERFAHRENS  │  └──────────────┘
        │             │ └──────────────────────┘    │  │    ▲
        │             │      │                       │  │    │
        │             │      ▼                       │  │    │
        │             │    ╱ GÜTE- ╲          NEIN   │  │    │
        │             │   ╱ VERGLEICH: ╲─────────────┼──┼────┘
        │             │  ╱ SPLINE-UND REF.╲          │  │
        │             │  ╲ IN ORDNUNG ?   ╱          │  │
        │             │   ╲             ╱            │  │
        │             └──────┼──────────────────────┘  │
        │                    │ JA          46           │
        │             ┌──────────────┐                  │
        │             │ KONTURTEIL   │                  │
        │             │ SPEICHERN    │                  │
        │             └──────────────┘                  │
        │                    │                          │
        │                    ▼                          │
        │                  ╱ KONTUR ╲    NEIN  ┌──────────────┐
        │                 ╱  FERTIG ? ╲───────►│ NÄCHSTES REFE-│
        │                 ╲           ╱        │ RENZ KONTUR-  │
        │                  ╲         ╱         │ TEIL HOLEN    │
        │                    │ JA              └──────────────┘
        │             ┌──────────────┐
        │             │ KONTUR       │
        │             │ ABSPEICHERN  │
        │             └──────────────┘
        │                    │
        │  NEIN              ▼
        └────────────────╱ ALLE ╲
                        ╱ KONTUREN ╲
                        ╲ FERTIG ?  ╱
                         ╲         ╱
                            │ JA
                    ┌──────────────────────┐
                    │ ZEICHEN IN SPLINE-   │
                    │ KODIERUNG ABSPEICHERN│
                    └──────────────────────┘
                            │
                            ▼
                        ( ENDE )
```

# FIG. 5

SYSTEMBUS 41

42 SPEICHER FÜR PIXELMATRIX+ AUßENKONTUREN

43 C P U

44 ECKENERKEN-NUNG UND FILTERUNG

45 REFERENZKON-TUR UND SPLINEDATEN-SPEICHER

46 APPROXIMATIONS HARDWARE

47 MEMORYBUS I

48 MEMORYBUS II

EP 0 290 374 B1

## FiG. 6

FIG. 7

zu 71 (FIG.8)

MISCHLOGIK X (Y)

zu 57 FIG. 6

## FIG. 8

ZU 68
(FIG.7)
ZU 69

71 72 73 74 75 VERGLEICHER

52

zu 57/58
FIG. 6

ABLAUF-
STEUERUNG

55 (FIG. 6)

## FIG. 9

EP 0 290 374 B1